## Europäisches Patentamt
## European Patent Office
## Office européen des brevets

(19)

(11) Veröffentlichungsnummer: **0 045 022**
**B1**

(12) **EUROPÄISCHE PATENTSCHRIFT**

(45) Veröffentlichungstag der Patentschrift:
05.11.86

(21) Anmeldenummer: **81105651.4**

(22) Anmeldetag: **18.07.81**

(51) Int. Cl.⁴: **F 16 H 47/04,** F 16 H 3/62

(54) **Hydromechanisches Getriebe.**

(30) Priorität: **25.07.80 US 172364**

(43) Veröffentlichungstag der Anmeldung:
**03.02.82 Patentblatt 82/5**

(45) Bekanntmachung des Hinweises auf die Patenterteilung:
**05.11.86 Patentblatt 86/45**

(84) Benannte Vertragsstaaten:
**AT BE DE FR GB IT NL**

(56) Entgegenhaltungen:
**FR-A-929 571**
**GB-A-1 423 125**
**US-A-3 090 253**
**US-A-3 306 129**
**US-A-3 534 632**
**US-A-3 736 813**
**US-A-4 181 041**
**US-E-27 307**

**HUGO KLEIN, Die Planetenrad-Umlaufgetriebe,**
**1962, CARL HAUSER VERLAG, München, pages**
**175,193-200**

(73) Patentinhaber: **DEERE & COMPANY, 1 John Deere**
**Road, Moline Illinois 61265 (US)**

(72) Erfinder: **Michael, Richard Arlo, 703 Burbank**
**Avenue, Waterloo Iowa 50702 (US)**

(74) Vertreter: **Gramm, Werner, Prof. Dipl.- Ing.,**
**Patentanwälte Gramm + Lins Theodor- Heuss-**
**Strasse 2, D-3300 Braunschweig (DE)**

## Beschreibung

Die Erfindung betrifft ein Getriebe gemäß dem Oberbegriff des Anspruchs 1.

Bei derartigen Getrieben kann die genannte Getriebeeinheit eine hydrostatische Einheit sein. Hydromechanische Getriebe stellen eine Kombination eines mechanischen Getriebes mit einer hydrostatischen Einrichtung dar. Mechanische Getriebe arbeiten zwar in der Regel effizienter und betriebssicherer als reine hydrostatische Getriebe, sie lassen sich aber nicht stufenlos regeln wie die teueren hydrostatischen Getriebe. Demgegenüber haben die hydrostatischen Getriebe den wesentlichen Nachteil, daß sie größer bauen, da sie verhältnismäßig große Pumpen und Motoren benötigen.

Um nun die Baugrößen zu begrenzen, die Kosten zu reduzieren, die Effizienz zu erhöhen und eine stufenlose Regelung über den vollen Bereich der Vorwärts- und Rückwärts-Geschwindigkeiten zu erreichen, wurden die besten Bauteile beider Getriebearten miteinander kombiniert zu einem sogenannten hydromechanischen Getriebe. Jedoch wurde jedes hydromechanische Getriebe für einen bestimmten Anwendungsfall ausgelegt; der Einsatz als Getriebe in einem Traktor ist begrenzt.

Das eingangs erläuterte hydromechanische Getriebe nach dem Oberbegriff des Anspruchs 1 läßt sich dem US-Patent (Reissue) 27 307 entnehmen. Dort ist z.B. in den Figuren 10 und 11 ein hydromechanisches Getriebe offenbart, dessen Planetenradgetriebe ein einziges Sonnenrad, eine Kupplung für hohe Geschwindigkeit sowie eine Bremse für den niedrigen Geschwindigkeitsbereich aufweist. Die auf dem Planetenradträger sitzenden Planetenräder kämmen mit zwei Außenrädern, von denen das eine über die genannte Kupplung mit der Antriebswelle verbunden und das andere über die genannte Bremse abgebremst werden kann. Im niedrigen Geschwindigkeitsbereich arbeitet das Getriebe rein hydrostatisch, während der hydromechanische Antrieb nur für den hohen Geschwindigkeitsbereich vorgesehen ist.

Ein derartiges Getriebe läßt sich in Traktoren kaum verwenden, da die Arbeitsgeschwindigkeiten eines Traktors im Bereich von 5 bis 13 km/h liegen. Dieser Bereich entspricht Ausgangs/Eingangs-Verhältnissen von etwa 0,25 bis 0,56 U/min, die überwiegend in dem ineffizienten vollhydrostatischen Arbeitsbereich liegen.

Ein anderes hydromechanisches Getriebe läßt sich der US-PS 3 534 632 entnehmen. Hier kommen aber zahlreiche Zahnradübersetzungen zum Einsatz, die das Getriebe sehr aufwendig machen.

Bei einem in der US-PS 3 736 813 offenbarten Getriebe ist nur ein begrenzter Drehzahlbereich erreichbar, der durch Verwendung eines zusätzlichen Schaltgetriebes vergrößert wird. Hierdurch wird der konstruktive Aufwand für das Getriebe enorm erhöht.

Aus der FR-A-929 571 ist ein aus drei Sonnenrädern und zwei Sätzen von Planetenrädern bestehendes Planetenradgetriebe mit mehreren Kupplungen und Bremsen bekannt, das die Schaltung mehrerer Gänge zuläßt.

Der Erfindung liegt die Aufgabe zugrunde, das eingangs erläuterte Getriebe so auszulegen, daß es auch im niedrigeren Drehzahlbereich effizient arbeitet und sich dadurch insbesondere auch für den Einbau in landwirtschaftliche oder Industrie-Traktoren eignet.

Diese Aufgabe wird gemäß der Erfindung durch die Merkmale des kennzeichnenden Teils des Anspruchs 1 gelöst.

Dabei ist es zweckmäßig, wenn die Getriebeeinheit eine hydrostatische Einheit ist und ein von der Antriebswelle angetriebenes Triebwerk mit veränderlicher Verdrängung, vorzugsweise eine Pumpe, und eine angetriebene Zweirichtungs-Sektion mit konstanter Verdrängung, vorzugsweise einen das erste Zentralrad antreibenden Motor umfaßt, wobei Pumpe und Motor über Verbindungsleitungen für den Flüssigkeitsaustausch miteinander verbunden sind.

Mit einem derartigen Getriebe erhält man drei Vorwärts- und zwei Rückwärts-Geschwindigkeitsbereiche und einen sehr großen stufenlos regelbaren hydromechanischen Übertragungsbereich mit hoher Effizienz in dem kritischen Geschwindigkeitsbereich von 5 bis 13 km/h.

Das Verbund-Planetenradgetriebe ist der hydrostatischen Antriebseinheit nachgeschaltet und bildet den mechanischen Schaltteil des Getriebes.

Weitere Merkmale der Erfindung sind Gegenstand der Patentansprüche.

In der Zeichnung ist eine als Beispiel dienende Ausführungsform der Erfindung dargestellt. Es zeigen:

Figur 1 ein hydromechanisches Getriebe im Längsschnitt und zum Teil in Seitenansicht;

Figur 2 eine schematische Darstellung gemäß der Schnittlinie 2-2 in Figur 1;

Figur 3 eine Tabelle zur Darstellung der vier Geschwindigkeitsbereiche des hydromechanischen Getriebes;

Figur 4 in einem Diagramm die verschiedenen Geschwindigkeitsverhältnisse für drei Sonnenräder, einen Planetenradträger und ein Außenrad und

Figur 5 eine Tabelle, in der die jeweiligen Betriebsstellungen der Kupplungen und Bremsen zur Erzielung der verschiedenen Geschwindigkeitsbereiche angegeben sind.

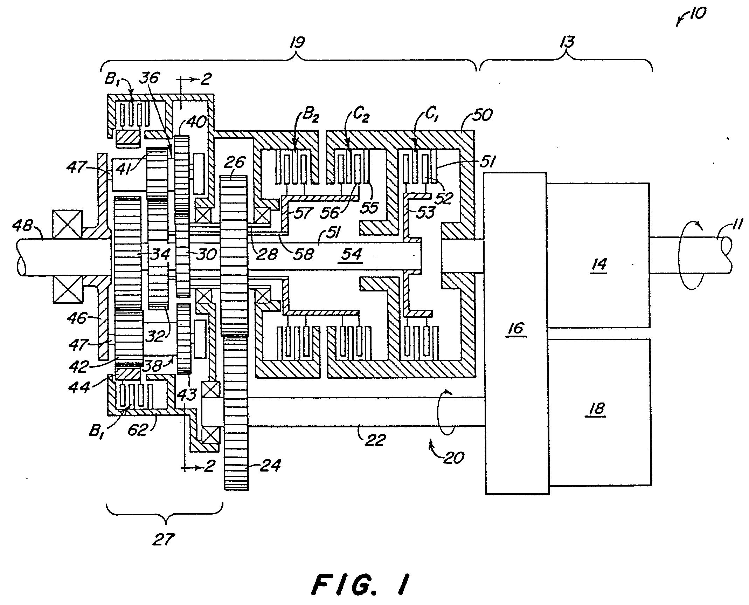

Das in Figur 1 dargestellte hydromechanische Getriebe 10 ist an eine Antriebswelle 11 angeschlossen, die üblicherweise von einer Verbrennungskraftmaschine kommt und sich nach hinten durch eine hydrostatische Antriebseinheit 13 hindurch erstreckt. Die Bezeichnung "hinten" wird in der Beschreibung benutzt, um die Anordnung des

hydromechanischen Getriebes 10 in einem Fahrzeug unter Bezug auf die Antriebsmaschine des Fahrzeuges zu beschreiben. Die genannte Bezeichnung ist daher nicht einschränkend zu verstehen.

Die hydrostatische Antriebseinheit 13 umfaßt ein angetriebenes Triebwerk 14 mit veränderlicher Verdrängung, Verbindungsleitungen 16 und eine angetriebene Zweirichtungs- oder reversible Sektion 18. Bei dem angetriebenen Triebwerk 14 handelt es sich vorzugsweise um eine Axialkolbenpumpe mit einer Taumelscheibe, die bezogen auf eine neutrale Stellung in entgegengesetzte Richtungen verstellbar ist. Die angetriebene Zweirichtungs-Sektion 18 ist vorzugsweise ein Motor mit konstanter Verdrängung, dessen Rotationsrichtung und -geschwindigkeit durch die Verdrängung der Pumpe 14 gesteuert wird. Die Verbindungsleitungen 16 dienen zum Flüssigkeitsaustausch zwischen Pumpe 14 und Motor 18.

Der Motor 18 ist mit einem mechanischen Getriebeteil 19 über eine Drehverbindung 20 verbunden, die aus einer Nebenwelle 22 besteht, deren in Figur 1 linkes bzw. rückwärtiges Ende ein erstes Zahnrad 24 trägt, das mit einem zweiten Zahnrad 26 kämmt, das drehfest auf einer ersten Hohlwelle 28 sitzt, die ihrerseits mit der Antriebswelle 11 fluchtet und an ein nachgeschaltetes Planetenradgetriebe 27 angeschlossen ist. Über die Drehverbindung 20 wird die hydrostatische Kraft auf den mechanischen Getriebeabschnitt 19 übertragen.

Das Verbund-Planetenradgetriebe 27 umfaßt drei hintereinander liegende und koaxial miteinander fluchtende Sonnenräder und zwar ein erstes Sonnenrad 30, ein zweites Sonnenrad 32 und ein drittes Sonnenrad 34. Um diese drei Sonnenräder laufen erste und zweite Sätze von Doppelplanetenrädern 36, 38 um, die jeweils drei im Abstand von 120 Winkelgrad voneinander angeordnete Doppelplanetenräder aufweisen. Jedes Doppelplanetenrad des ersten Satzes 36 besteht aus einem ersten Planetenrad 40 und einem zweiten Planetenrad 41, die vorzugsweise unterschiedliche Durchmesser aufweisen, wobei das erste Planetenrad 40 einen größeren Durchmesser aufweist als das zweite Planetenrad 41. Alle ersten Planetenräder 40 kämmen mit dem ersten Sonnenrad 30, während alle zweiten Planetenräder 41 mit dem zweiten Sonnenrad 32 kämmen.

Jedes Doppelplanetenrad des zweiten Satzes 38 besteht aus einem dritten Planetenrad 42 und einem vierten Planetenrad 43, die ebenfalls vorzugsweise unterschiedliche Durchmesser aufweisen, wobei der Durchmesser des vierten Planetenrades 43 größer ist als der des dritten Planetenrades 42. Alle vierten Planetenräder 43 kämmen mit einem der ersten Planetenräder 40, während alle dritten Planetenräder 42 mit dem dritten Sonnenrad 34 kämmen.

Das Verbund-Planetenradgetriebe 27 umfaßt ferner ein mit Innenverzahnung versehenes Außenrad 44 sowie einen drehbaren Planetenradträger 46. Das Außenrad 44 kämmt mit den dritten Planetenrädern 42 und übergreift insoweit den drehbaren Planetenradträger 46. Letzterer trägt den ersten und zweiten Satz der Doppelplanetenräder 36, 38 auf Lagerzapfen 47, von denen zwei in Fig. 1 dargestellt sind.

Mit dem Planetenradträger 46 ist ein sich nach hinten erstreckender Getriebeausgang 48 verbunden, bei dem es sich vorzugsweise um eine Abtriebswelle handelt, die üblicherweise wiederum mit einer Antriebswelle verbunden ist, die die Antriebskraft auf die Hinterräder des Fahrzeuges überträgt.

Das hydromechanische Getriebe 10 umfaßt ferner erste und zweite Kupplungen C1 und C2 sowie erste und zweite Bremsen B1 und B2. Die erste Kupplung C1 ist in einem drehbaren Kupplungsgehäuse 50 angeordnet, das hinter der hydrostatischen Antriebseinheit 13 liegt und drehfest mit dem linken bzw. hinteren Ende der Antriebswelle 11 verbunden ist, die sich durch die pumpe 14 der Antriebseinheit 13 erstreckt. Die erste Kupplung C1 ist von üblicher Bauart und umfaßt eine Vielzahl von Kupplungsscheiben oder -lamellen 51, die an der Innenwandung der Kupplungstrommel 50 befestigt sind und mit einer Vielzahl von Kupplungsscheiben 52 zusammenwirken, die ihrerseits auf einer ersten Nabe 53 befestigt sind, die ihrerseits an dem vorderen bzw. rechten Ende einer drehbaren Welle 54 drehfest angeordnet ist. Letztere erstreckt sich durch die Hohlwelle 28 und trägt an ihrem linken bzw. rückwärtigen Ende das dritte Sonnenrad 34. Durch Betätigung der ersten Kupplung C1 werden die Welle 54 und damit das dritte Sonnenrad 34 an die Antriebswelle 1 gekuppelt und rotieren dadurch mit gleicher Geschwindigkeit.

Auch die zweite Kupplung C2 ist in der drehbaren Kupplungstrommel 50 angeordnet und liegt hinter der ersten Kupplung C1. Die zweite Kupplung ist von üblicher Bauart und umfaßt mehrere Kupplungsscheiben bzw. -lamellen 55, die auf der Innenwandung der Kupplungstrommel 50 befestigt sind und zusammenwirken mit mehreren Kupplungsscheiben 56, die auf einer zweiten Nabe 57 sitzen, die ihrerseits an dem vorderen bzw. rechten Ende einer Hohlwelle 58 sitzt. Letztere umschließt die Welle 54 und trägt das zweite Sonnenrad 32. Durch Beaufschlagung der zweiten Kupplung erhalten die Hohlwelle 58 mit dem zweiten Sonnenrad 32 die gleiche Geschwindigkeit wie die Antriebswelle 11.

Beide Kupplungen C1 und C2 unterliegen einer Flüssigkeitskühlung, um die durch die Reibung zwischen den Kupplungslamellen und -scheiben entstandene Wärme abzuführen. Die Kupplungstrommel 50 ist zwar als einstückiges Bauteil dargestellt, sie kann aber aus mehreren Teilen zusammengesetzt sein.

Die erste Bremse B1 ist zwischen einem Getriebegehäuse 62 und dem Außenrad 44 angeordnet und dient zum wahlweisen Abbremsen des Außenrades 44, das in blockierter Stellung als Reaktionselement für den zweiten Satz der Doppelplanetenräder 38 dient, die dann an dem Außenrad 44 abrollen und so dem Planetenradträger 46 eine bestimmte reduzierte Geschwindigkeit verleihen.

Die zweite Bremse B2 liegt hinter der zweiten Kupplung C2 zwischen dem Getriebegehäuse 62 und der zweiten Nabe 57. Die zweite Bremse B2 dient zum wahlweisen Abbremsen des zweiten Sonnenrades 32, wobei bei eingeschalteter Bremse die zweite Nabe 57 und dadurch die Hohlwelle 58 sowie das zweite Sonnenrad 32 an einer Drehung gehindert sind. Wird das zweite Sonnenrad 32 stationär gehalten, läuft der erste Satz der Doppelplanetenräder 36 um das zweite Sonnenrad 32 herum und bewirkt eine Rückwärtsrotation des Planetenradträgers 46.

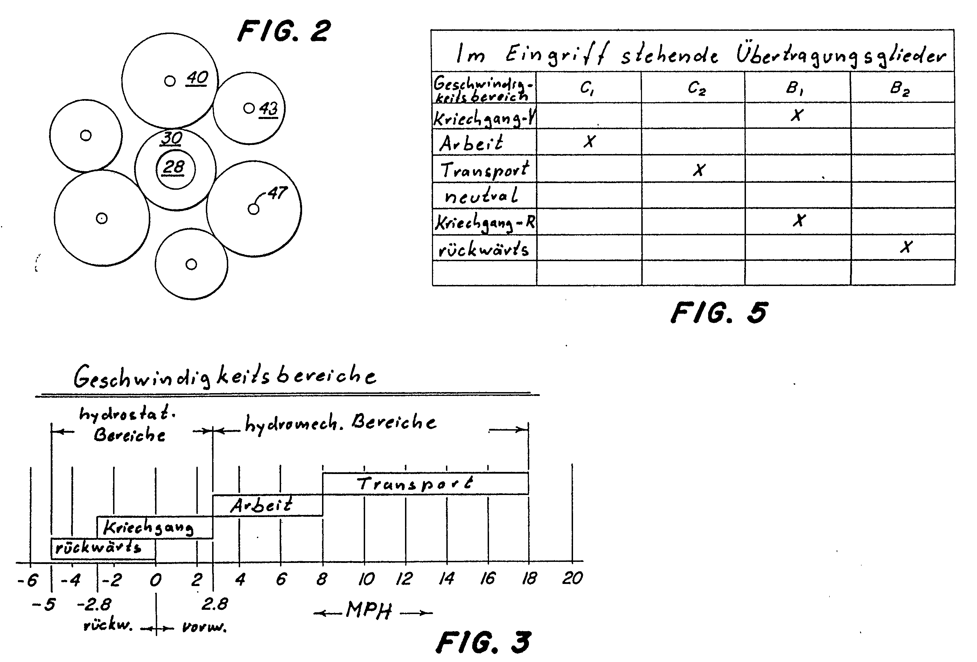

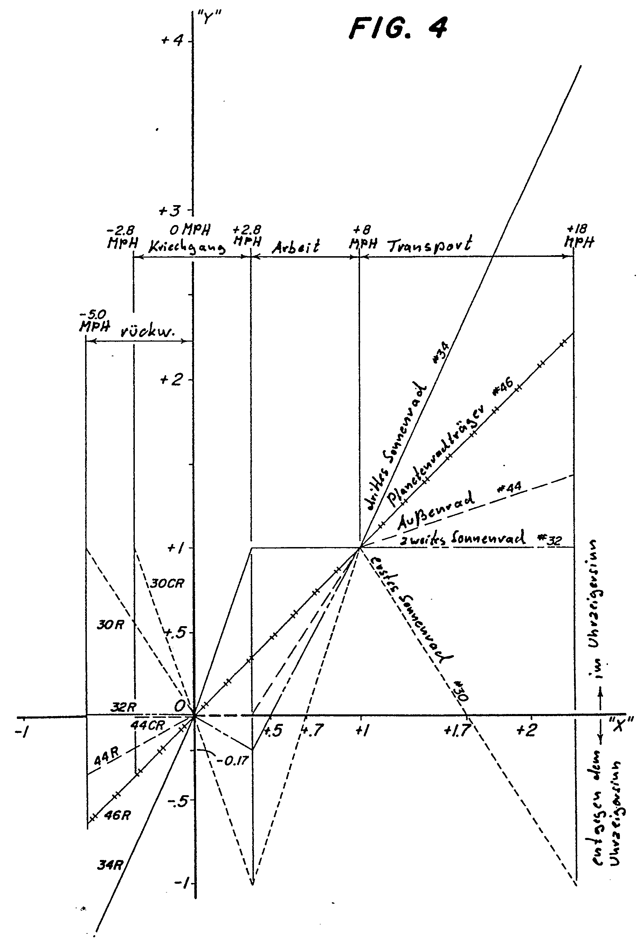

Figur 3 zeigt die Anordnung der vier hydrostatischen und hydromechanischen Geschwindigkeitsbereiche, die mit "Rückwärts", "Kriechen", "Arbeit" und "Transport" bezeichnet sind. Der Kriechbereich ist unterteilt in Vorwärt- und Rückwärts-Kriechen. Die verschiedenen Beaufschlagungen der Kupplungen und Bremsen zur Erreichung dieser verschiedenen Geschwindigkeitsbereiche sind in Figur 5 dargestellt, während die tatsächliche Geschwindigkeit des Außenrades 44 sowie der drei Sonnenräder in Figur 4 dargestellt sind. Eine Erläuterung erfolgt weiter unten.

Die Betätigung der genannten Kupplungen und Bremsen erfolgt hydraulisch und zwar in für den Durchschnittsfachmann bekannter Weise. Diese Betätigungseinrichtungen sowie die Steuerungen sind daher nicht im einzelnen dargestellt und erläutert.

Die Arbeitsweise des hydromechanischen Getriebes ist wie folgt:

Gemäß den Figuren 4 und 5 befindet sich das Getriebe in neutraler Stellung, wenn die beiden Kupplungen C1 und C2 sowie die beiden Bremsen B1 und B2 ausgerückt sind. In dieser neutralen Stellung wird die Pumpe 14 von der Antriebswelle 11 angetrieben, weist aber keine Verdrängung auf. Für die weitere Beschreibung soll unterstellt werden, daß die Antriebswelle 11 immer im Uhrzeigersinn mit konstanter Geschwindigkeit von etwa 2.200 U/min rotiert. Diese konstante Geschwindigkeit ist äquivalent dem Wert a + 1 auf der Y-Achse der Figur 4.

Da keine Flüssigkeit in der Pumpeneinheit 14 verdrängt wird, erfolgt keine Drehung des Motors 18. Betätigt der Fahrer den Schalthebel in Vorwärts- oder Rückwärts-Stellung, zieht die erste Bremse B1 an und das hydromechanische Getriebe 10 schaltet in den Kriechbereich. Dieser umfaßt sowohl eine langsame Vorwärtsals auch eine langsame Rückwärts-Geschwindigkeit. Für die in Figur 4 dargestellten speziellen Getriebewerte erstreckt sich der Kriechbereich von -2,8 bis +2,8 Meilen/h. Dabei ergeben sich alle Geschwindigkeitsbereiche aus der Anzahl der Zähne der verschiedenen Zahnräder des Verbund-Planetenradgetriebes 27. Die

Zahlenwerte der vier verschiedenen Geschwindigkeitsbereiche ergeben sich bei Verwendung folgender Zahnradgrößen: Das erste Sonnenrad 30 hat 27 Zähne, das zweite Sonnenrad 32 hat 36 Zähne, das dritte Sonnenrad 34 hat 42 Zähne und das Außenrad 44 hat 78 Zähne. Diese Verhältnisse können natürlich geändert und anderen Erfordernissen angepaßt werden.

Im Vorwärts-Kriechgang ist die erste Bremse B1 angezogen, während die Taumelscheibe der ständig im Uhrzeigersinn angetriebenen Pumpe 14 für eine positive Verdrängung geneigt ist. Hierdurch wird Flüssigkeit durch die Verbindungsleitungen 16 zum Motor 18 gedrückt, der dadurch im Uhrzeigersinn dreht und die Nebenwelle 22 mit dem ersten Zahnrad 24 in gleicher Richtung antreibt. Das zweite Zahnrad 26, das mit dem ersten Zahnrad 24 kämmt, dreht somit entgegen dem Uhrzeigersinn und überträgt diese Rotation über die erste Hohlwelle 28 auf das erste Sonnenrad 30.

Durch Anziehen der ersten Bremse B1 wird das Außenrad 44 stationär gehalten und dient als Reaktionselement für den zweiten Satz der Doppelplanetenräder 38 über die dritten Planetenräder 42. Der zweite Satz der Doppelplanetenräder 38 rollt daher an der Innenverzahnung des Außenringes 44 ab und bewirkt so eine Rotation des Planetenradträgers 46 im Uhrzeigersinn jedoch mit reduzierter Geschwindigkeit gegenüber der Geschwindigkeit der Antriebswelle 11. Die Abtriebswelle 48 rotiert entsprechend.

Für den Rückwärts-Kriechgang bleibt die erste Bremse B1 angezogen, jedoch wird die Taumelscheibe der Pumpe 14 in entgegengesetzte Richtung, bezogen auf die neutrale Stellung, verschwenkt. Hierdurch erhält man eine negative Verdrängung, die zu einer umgekehrten Zirkulation der Flüssigkeit durch die hydrostatische Antriebseinheit 13 führt. Dieser Umkehrstrom bewirkt eine Rotation des Motors 18 entgegen dem Uhrzeigersinn, eine entsprechende Rotation der Nebenwelle 22 mit ihrem ersten Zahnrad 24 und dementsprechend eine Rotation im Uhrzeigersinn des zweiten Zahnrades 26 und somit des ersten Sonnenrades 30. Dadurch wiederum rotiert die Abtriebswelle 48 entgegengesetzt dem Uhrzeigersinn mit einer reduzierten Geschwindigkeit im Vergleich zu der der Antriebswelle 11. Gemäß Figur 4 wird das Außenrad 44 durch die Bremse B1 stationär gehalten, jedoch verläuft die dargestellte Linie unmittelbar unterhalb der X-Achse aus Gründen der Übersichtlichkeit und ist mit 44CR bezeichnet. Diese Bezeichnung verweist auf das Bezugszeichen des Außenrades 44, wobei CR die Abkürzung für "creeper-reverse" darstellt. Bei dieser Schaltung folgt das erste Sonnenrad 30 der mit 30CR bezeichneten Linie. Für Rückwärts-Geschwindigkeit folgen das erste Sonnenrad 30 und das Außenrad 44 den Linien 30R und 44R, wobei der Buchstabe "R" für "reverse" steht.

Da für Vorwärts- und Rückwärts-Kriechgang die gesamte Antriebskraft von der hydrostatischen Antriebseinheit 13 auf das erste Sonnenrad 30 übertragen wird, handelt es sich bei dem Kriechbereich um einen reinen hydrostatischen Bereich. Wird die Verdrängung der pumpe 14 vergrößert, erhöht sich die Geschwindigkeit des Motors 18 und damit auch der Abtriebswelle 48. Bei größtmöglicher Verdrängung der pumpe 14 wird das erste Sonnenrad 30 mit 2.200 U/min oder ± 1 auf der Y-Achse der Figur 4 angetrieben. Im Kriechbereich wird das dritte Sonnenrad 34 mit derselben Geschwindigkeit angetrieben wie das erste Sonnenrad 30, jedoch in entgegengesetzter Richtung. Dies bedeutet, daß am oberen Ende des Kriechbereiches bei ca. 2,8 Meilen/h das dritte Sonnenrad 34 mit derselben Geschwindigkeit und in derselben Richtung rotiert wie die Antriebswelle 11, was bei 1,0 auf der Y-Achse dargestellt ist.

Erreicht die Ausgangsgeschwindigkeit das obere Ende des Kriechbereichs bei etwa 2,8 Meilen/h, bewegt der Fahrer den Schalthebel in den Arbeitsbereich, um so die Bremse B1 zu lösen, die Kupplung C1 aber einzurücken.

Durch Einrücken der ersten Kupplung C1 wird die Antriebskraft unmittelbar von der Antriebswelle 11 auf das dritte Sonnenrad 34 übertragen, das somit mit gleicher Geschwindigkeit und in gleicher Richtung rotiert wie die Antriebswelle 11, so daß das Einrücken der ersten Kupplung C1 erfolgt bei Null-Relativgeschwindigkeit bzw. bei synchroner Geschwindigkeit. Während das dritte Sonnenrad 34 von der Antriebswelle 11 mechanisch angetrieben wird, erfolgt der Antrieb des ersten Sonnenrades 30 von der hydrostatischen Antriebseinheit 13. Dieser doppelte Antriebsweg führt zu zwei getrennten Energieeingängen in das Verbund-Planetenradgetriebe 27 und wird als hydromechanischer Antrieb bezeichnet.

Figur 4 läßt erkennen, daß das erste Sonnenrad 30 entgegen dem Uhrzeigersinn rotiert bei seiner höchsten Geschwindigkeit zwischen dem Vorwärts-Kriechgang und dem Arbeitsbereich. Beim Übergang zum Arbeitsbereich rotiert das erste Sonnenrad 30 immer noch entgegen dem Uhrzeigersinn aber mit verringerter Geschwindigkeit infolge der verringerten Verdrängung der Pumpe 14. Beim Punkt 0,7 auf der X-Achse kehrt sich die Umdrehungsrichtung des ersten Sonnenrades 30 um, das dann im Uhrzeigersinn rotiert. Dieser Richtungswechsel wird bewirkt durch einen Wechsel der Verdrängung vom negativen zum positiven Bereich bei der Pumpe 14. Das erste Planetenrad 30 nimmt in seiner Geschwindigkeit im Uhrzeigersinn zu, bis es im Uhrzeigersinn seine Maximalgeschwindigkeit bzw. den Übergangspunkt erreicht, wo das Getriebe 10 in den Transportbereich geschaltet wird. Dieser Punkt hat die Koordinaten 1,1 in Figur 4.

Über den Arbeitsbereich wird das dritte Sonnenrad 34, das mit der Antriebswelle 11 gekuppelt ist, mit konstanter Geschwindigkeit von etwa 2.200 U/min angetrieben. Die Geschwindigkeitszunahme im Arbeitsbereich erfolgt daher durch die hydrostatische Antriebseinheit 13. Wie sich aus Figur 4 ergibt, erstreckt sich der Arbeitsbereich von 2,8 bis etwa 8 Meilen/h. Bei diesem Endpunkt bewegt der Fahrer den Schalthebel, um in die höhere Transportgeschwindigkeit überzugehen.

An dem Punkt, an dem der Transport-Geschwindigkeitsbereich beginnt, sind die erste Kupplung C1 ausgerückt und die zweite Kupplung C2 eingerückt (siehe Figur 5). Durch die eingerückte zweite Kupplung C2 wird die Kraft von der Antriebswelle 11 unmittelbar auf das zweite Sonnenrad 32 übertragen. Gemäß Figur 4 rotiert das zweite Sonnenrad 32 mit derselben Geschwindigkeit in der gleichen Umdrehungsrichtung wie die Antriebswelle 11 (1,0 auf der Y-Achse) und zwar an dem Punkt des Übergangs vom Arbeitsin den Transport-Geschwindigkeitsbereich. Dadurch kann die Kupplung C2 bei Null-Relativgeschwindigkeit bzw. Synchron-Geschwindigkeit eingerückt werden. Das mit der Antriebswelle 11 gekoppelte zweite Sonnenrad 32 wird mit konstanter Geschwindigkeit im Uhrzeigersinn mit 2.200 U/min über den Transport-Geschwindigkeitsbereich gedreht.

Während das zweite Sonnenrad 32 von der Antriebswelle 11 mechanisch angetrieben wird, erfolgt der Antrieb des ersten Sonnenrades 30 hydrostatisch durch die hydrostatische Antriebseinheit 13. Hierdurch ergeben sich wiederum zwei Antriebseingänge in das Verbund-Planetenradgetriebe 27 ähnlich der Anordnung für den Arbeits-Geschwindigkeitsbereich.

Gemäß Figur 4 dreht das erste Sonnenrad 30 im Uhrzeigersinn mit 2.200 U/min an dem Übergangspunkt zwischen dem Arbeits- und dem Transport-Geschwindigkeitsbereich. Beim Übergang in den letzteren Bereich dreht das erste Sonnenrad 30 immer noch im Uhrzeigersinn aber mit verringerter Geschwindigkeit aufgrund der abnehmenden Verdrängung durch die Pumpe 14. Beim punkt 1,7 auf der X-Achse kehrt das erste Sonnenrad 30 die Umdrehungsrichtung um und beginnt entgegen dem Uhrzeigersinn zu rotieren. Dieser Richtungswechsel ergibt sich durch die Veränderung der Verdrängung von der positiven auf die negative Seite bei der Pumpe 14. Aus der Zeichnung folgt, daß das erste Sonnenrad 30 weiterhin im Uhrzeigersinn rotiert aber mit zunehmender Geschwindigkeit, und zwar für alle weiteren Geschwindigkeitszunahmen.

Der Rückwärts-Geschwindigkeitsbereich, der ein Hochgeschwindigkeitsbereich ist, wird von der Neutralstellung erreicht durch Beaufschlagung der zweiten Bremse B2 (siehe Figur 5). Hierdurch wird das zweite Sonnenrad 32 abgebremst, was durch die Linie 32R angezeigt wird, so daß dieses zweite Sonnenrad 32 als Reaktionselement für den ersten Satz der Doppelplanetenräder 36 über das zweite Planetenrad 41 dient. Gleichzeitig dreht die von der hydrostatischen Antriebseinheit 13 kommende Kraft das erste Sonnenrad 30 im Uhrzeigersinn. Aufgrund des kombinierten Effektes dieser beiden verschiedenen Vorgänge wird die Abtriebswelle 48 entgegen dem Uhrzeigersinn bzw. rückwärts gedreht im Vergleich zur Antriebswelle 11. Für die gewählten Zahnradgrößen ergibt sich ein Rückwärts-Geschwindigkeitsbereich von 0 bis -5,0 Meilen/h. Hierdurch unterscheidet er sich von dem Kriech-Rückwärts-Geschwindigkeitsbereich. In Figur 4 ist die Linie 32R für das zweite Sonnenrad unmittelbar oberhalb der X-Achse dargestellt und zwar aus Gründen der besseren Übersichtlichkeit, da sie tatsächlich genau auf der X-Achse liegt.

Bei dem erfindungsgemäßen hydromechanischen Getriebe 10 ist es nicht möglich, von dem Kriech-Rückwärtsgang unmittelbar in den Rückwärts-Geschwindigkeitsbereich zu schalten. Der Fahrer muß daher, wenn sich der Schalthebel in neutraler Stellung befindet, entscheiden, in welchen der beiden rückwärtigen Geschwindigkeitsbereiche das Fahrzeug gebracht werden soll.

**Patentansprüche**

1. Getriebe mit einer reversiblen stufenlos einstellbaren Getriebeeinheit (13) zum Anschluß an eine Antriebswelle (11) und mit einem Planetenradgetriebe (27), das zumindest zwei von der Getriebeeinheit (13) angetriebene Zentralräder (30, 34), eine Abtriebswelle (48) sowie ein weiteres, von einer ersten Bremse (B1) wahlweise abbremsbares Zentralrad (44) aufweist, wobei Umlaufräder (38) zwischen zwei der genannten Zentralräder zum Antrieb der Abtriebswelle (48) vorgesehen sind, gekennzeichnet durch folgende Merkmale:

a) Von der Antriebswelle (11) sind insgesamt drei Zentralräder (30,32,34) wahlweise antreibbar;

b) die ersten beiden (30,32) dieser Zentralräder stehen über erste Umlaufräder (36) mit der Abtriebswelle (48) in Drehverbindung, um die Abtriebswelle (48) über einen hohen Vorwärtsgeschwindigkeitsbereich anzutreiben, wenn das zweite Zentralrad (32) von der Antriebswelle (11) und das erste Zentralrad (30) über Geschwindigkeitsbereiche durch die genannte Getriebeeinheit (13) angetrieben werden;

c) zweite Umlaufräder (38) kämmen mit den ersten Umlaufrädern (36), dem dritten Zentralrad (34) sowie dem wahlweise abbremsbaren Zentralrad (44), um die Abtriebswelle (48) über einen mittleren Vorwärts-Geschwindigkeitsbereich anzutreiben, wenn das dritte Zentralrad (34) von der Antriebswelle (11) und das erste Zentralrad (30) über Geschwindigkeitsbereiche durch die Getriebeeinheit (13) angetrieben werden, und um die Abtriebswelle (48) über einen niedrigen Vorwärts- und Rückwärts-Geschwindigkeitsbereich anzutreiben, wenn das genannte, von der ersten Bremse (B1) wahlweise abbremsbare Zentralrad (44) abgebremst und das erste Zentralrad (30) über Geschwindigkeitsbereiche durch die Getriebeeinheit (13) angetrieben sind;

d) die ersten und zweiten Umlaufräder (36, 38) sind auf dem gleichen Umlaufrädersteg (46) angeordnet, der mit der Abtriebswelle (48) gekoppelt ist.

2. Getriebe nach Anspruch 1, gekennzeichnet durch eine zweite Bremse (B2) zum wahlweisen Abbremsen des zweiten Zentralrades (32), wobei die genannten ersten Umlaufräder (36) die Abtriebswelle (48) über einen hohen Rückwärts-Geschwindigkeitsbereich antreiben, der größer ist als der niedrige Rückwärts-Geschwindigkeitsbereich, sich aber mit diesem überlappt, wenn das zweite Zentralrad (32) abgebremst und das erste Zentralrad (30) über Geschwindigkeitsbereiche durch die Getriebeeinheit (13) angetrieben sind.

3. Getriebe nach Anspruch 1 oder 2, dadurch gekennzeichnet, daß die Getriebeeinheit (13) eine hydrostatische Einheit ist und ein von der Antriebswelle (11) angetriebenes Triebwerk mit veränderlicher Verdrängung, vorzugsweise eine Pumpe (14), und eine angetriebene Zweirichtungs-Sektion mit konstanter Verdrängung, vorzugsweise einen das erste Zentralrad (30) antreibenden Motor (18) umfaßt, wobei Pumpe (14) und Motor (18) über Verbindungsleitungen (16) für den Flüssigkeitsaustausch miteinander verbunden sind.

4. Getriebe nach Anspruch 1, 2 oder 3, dadurch gekennzeichnet, daß die genannten ersten Umlaufräder (36) erste und zweite Planetenräder (40, 41) sind, die mit jeweils dem ersten und zweiten Zentralrad (30, 32) in Eingriff stehen, und daß die genannten zweiten Umlaufräder (38) dritte und vierte Planetenräder (42, 43) sind, von denen das dritte Planetenrad (42) mit dem dritten Zentralrad (34) sowie dem wahlweise abbremsbaren Zentralrad (44), das vierte Planetenrad (43) jedoch mit dem ersten Planetenrad (40) in Eingriff stehen.

5. Getriebe nach Anspruch 4, gekennzeichnet durch einen ersten Satz von Doppelplanetenrädern (36), die jeweils erste (40) und zweite (41) Planetenräder aufweisen, und durch einen zweiten Satz von Doppelplanetenrädern (38), die jeweils dritte (42) und vierte (43) Planetenräder aufweisen.

6. Getriebe nach Anspruch 5, dadurch gekennzeichnet, daß die ersten und zweiten Planetenräder (40, 41) des ersten Satzes der Doppelplanetenräder (36) koaxial miteinander verbunden sind, wobei der Durchmesser des ersten Planetenrades (40) größer ist als der des zweiten Planetenrades (41).

7. Getriebe nach Anspruch 5 oder 6, dadurch gekennzeichnet, daß die dritten und vierten Planetenräder (42, 43) des zweiten Satzes der Doppelplanetenräder (38) koaxial miteinander verbunden sind, wobei der Durchmesser des vierten Planetenrades (43) größer ist als der des dritten Planetenrades (42).

8. Getriebe nach einem der vorhergehenden Ansprüche, dadurch gekennzeichnet, daß das erste, zweite und dritte Zentralrad ein erstes, zweiten und drittes Sonnenrad (30, 32, 34) sind, die axial miteinander fluchten.

9. Getriebe nach einem der vorhergehenden Anspruche, dadurch gekennzeichnet, daß das wahlweise abbremsbare Zentralrad ein Außenrad (44) und der Umlauffrädersteg ein mit einer Abtriebswelle (48) verbundener Planetenradträger (46) sind.

10. Getriebe nach Anspruch 8 oder 9, dadurch gekennzeichnet, daß die Getriebeeinheit (13) mit dem ersten Sonnenrad (30) über eine sich aus dieser Getriebeeinheit (13) erstreckende Nebenwelle (22) verbunden ist, die ein erstes Zahnrad (24) trägt, das mit einem koaxial mit dem ersten Sonnenrad (30) verbundenen zweiten Zahnrad (26) kämmt.

11. Getriebe nach Anspruch 10, dadurch gekennzeichnet, daß die Nebenwelle (22) unmittelbar von dem Motor (18) angetrieben wird.

12. Getriebe nach Anspruch 10 oder 11, dadurch gekennzeichnet, daß die Nebenwelle (22) parallel zur und im Abstand von der Antriebswelle (11) liegt.

13. Getriebe nach einem der Ansprüche 8 bis 12, dadurch gekennzeichnet, daß das erste Sonnenrad (30) an einer Getriebeeingangswelle (28) sitzt, während das dritte Sonnenrad (34) neben dem Planetenradträger (46) und das zweite Sonnenrad (32) zwischen den beiden anderen Sonnenrädern liegen.

14. Getriebe nach einem der vorhergehenden Ansprüche, gekennzeichnet durch eine erste Kupplung (C1) zur wahlweisen Verbindung der Antriebswelle (11) mit dem dritten Zentralrad (34) und durch eine zweite Kupplung (C2) zur wahlweisen Verbindung der Antriebswelle (11) mit dem zweiten Zentralrad (32).

15. Getriebe nach Anspruch 14, dadurch gekennzeichnet, daß die erste Kupplung (C1) mit einer ersten Nabe (53) kuppelbar ist, die auf einer koaxial mit dem dritten Sonnenrad (34) verbundenen Welle (54) sitzt.

16. Getriebe nach Anspruch 15, dadurch gekennzeichnet, daß das erste Sonnenrad (30) sowie das zweite Zahnrad (26) koaxial an den Enden einer die Getriebeeingangswelle bildenden zweiten Hohlwelle (28) drehfest befestigt sind, die die erste Hohlwelle (58) umschließt.

**Claims**

1. A transmission comprising a reversible infinitely adjustable power transmission section (13) for connection to a driving shaft (11), and a sun-and-planet gear (27) including at least two central wheels (30, 34) driven by said transmission section (13) an output shaft (48) as well as another central wheel (44) selectively brakeable by a first brake (B1), whereby planet wheels (38) are positioned between two of said central wheels for driving said output shaft (45), characterized by the following features:

a) Altogether three central wheels (30,32,34) are selectively driveable by said driving shaft (11);

b) the first two (30,32) of said central wheels are via first planet wheels (36) in rotary connection with said output shaft (48) for driving the output shaft (48) through a high forward speed range, when the second central wheel (32) is driven by the driving shaft (11) and the first central wheel (30) is driven through ranges of speed by said power transmission section (13);

c) second planet wheels (38) are meshing with the first planet wheels (36), the third central wheel (34) as well as with the selectively brakeable central wheel (44), for driving the output shaft (48) through an intermediate forward speed range, when said third central wheel (34) is driven by said driving shaft (11) and the first central wheel (30) is driven through ranges of speed by said power transmission section (13), and for driving said output shaft (48) through a low forward and reverse speed range when said central wheel (44) which is selectively brakeable by the first brake (B1) is braked and the first central wheel (30) is driven through speed ranges by the power transmission section (13);

d) said first and second planet wheels (36, 38) are arranged on the same rotatable carrier (46) being coupled to the output shaft (48).

2. The transmission according to claim 1, further comprising a second brake (B2) for selectively braking the second central wheel (32) whereby said first planet wheels (36) drive said output shaft (48) through a high reverse speed range greater than, but overlapping the low reverse speed range when the second central wheel (32) is braked and the first central wheel (30) is driven through ranges of speed by said power transmission section (13).

3. The transmission according to claim 1 or 2, wherein said power transmission section (13) is a hydrostatic section and comprises a variable displacement drive section, preferably a pump (14), driven by said driving shaft (11), and a driven bi-directional constant displacement drive section, preferably a motor (18) driving the first central wheel (30), said pump (14) and motor (18) being interconnected via connecting lines (16) for the exchange of fluid.

4. The transmission according to claim 1, 2 or 3, wherein said first planet wheels (36) are first and second planet gears (40, 41) engaging said first and second central wheels (30, 32) respectively and wherein said second planet wheels (38) are third and fourth planet gears (42, 43), the third planet gear (42) engaging the third central wheel

(34) and the selectively brakeable central wheel (44) the fourth planet gear (43), however, engaging the first planet gear (40).

5. The transmission according to claim 4 further comprising a first set of cluster gears (36), each cluster gear having first (40) and second (41) planet gears, and a second set of cluster gears (38), each having third (42) and fourth (43) planet gears.

6. The transmission according to claim 5, wherein the first and second planet gears (40, 41) of the first set of cluster gears (36) are coaxially interconnected, the diameter of said first planet gear (40) being larger than the diameter of said second planet gear (41).

7. The transmission according to claim 5 or 6 wherein the third and fourth planet gears (42, 43) of the second set of cluster gears (38) are coaxially interconnected, the diameter of the fourth planet gear (43) being larger than the diameter of said third planet gear (42).

8. The transmission according to one of the preceding claims, wherein said first, second and third central wheels are first, second and third sun gears (30, 32, 34) being in axial alignment.

9. The transmission according to one of the preceding claims, wherein the selectively brakeable central wheel is a ring gear (44) and said rotatable carrier is a planetary carrier (46) connected to an output shaft (48).

10. The transmission according to claim 8 or 9, wherein the power transmission section (13) is connected to said first sun gear (30) via an auxiliary shaft (22) extending from said power transmission section (13), said auxiliary shaft (22) having a first gear (24) meshing with a second gear (26) coaxially connected to said first sun gear (30).

11. The transmission according to claim 10, wherein said auxiliary shaft (22) is driven directly by said motor (18).

12. The transmission according to claim 10 or 11, wherein said auxiliary shaft (22) is positioned parallel to and spaced apart from said driving shaft (11).

13. The transmission according to one of the claims 8 to 12, wherein said first sun gear (30) is connected to a transmission input shaft (28), the third sun gear (34) being adjacent to the planetary carrier (46) and the second sun gear (32) being positioned between the two other sun gears.

14. The transmission according to one of the preceding claims, further comprising a first clutch (C1) for selectively connecting said driving shaft (11) to the third central wheel (34), and a second clutch (C2) for selectively connecting the driving shaft (11) to the second central wheel (32).

15. The transmission according to claim 14 wherein said first clutch (C1) can be coupled to a first hub (53) mounted on a shaft (54) which is coaxially connected to the third sun gear (34).

16. The transmission according to claim 15, wherein the first sun gear (30) as well as the second gear (26) are coaxially and non-rotatably mounted on opposite ends of a second hollow shaft (28) forming the transmission input shaft and encircling the first hollow shaft (58).

**Revendications**

1. Transmission comportant un ensemble d'entraînement réversible (13) réglable en continu devant être raccordé à un arbre de transmission (11) et comportant un mécanisme ou train épicycloïdal (27) qui comporte au moins deux planétaires (30, 34) entraînés par l'ensemble d'entraînement (13), un arbre de sortie (48), ainsi qu'un autre planétaire (44) pouvant être freiné sélectivement par un premier frein (B1), des satellites (38) étant prévus entre deux des planétaires cités pour entraîner l'arbre de sortie (48), caractérisée par les caractéristiques suivantes:

a) trois planétaires (30, 32, 34) au total peuvent être entraînés sélectivement par l'arbre de transmission (11):

b) les deux premiers planétaires (30, 32) parmi ces planétaires sont accouplés en rotation, par l'intermédiaire des premiers satellites (36), avec l'arbre de sortie (48), pour entraîner l'arbre de sortie (48) sur une gamme de hautes vitesses de marche avant, lorsque le second planétaire (32) est entraîné par l'arbre de transmission (11) et que le premier planétaire (30) est entraîné par ledit ensemble d'entraînement (13) sur des gammes de vitesses;

c) de seconds satellites (38) engrènent avec les premiers satellites (36), le troisième planétaire (34) et le planétaire (44) pouvant être freiné sélectivement, pour entraîner l'arbre de sortie (48) sur une gamme de vitesses de marche avant moyenne, lorsque le troisième planétaire (34) est entraîné par l'arbre de transmission (11) et que le premier planétaire (30) est entraîné sur des gammes de vitesses par l'ensemble d'entraînement (13), et pour entraîner l'arbre de sortie (48) sur une gamme de basses vitesses de marche avant et de marche arrière, lorsque le-dit planétaire (44), pouvant être freiné sélectivement par le premier frein (B1), est freiné et que le premier planétaire (30) est entraîné sur des gammes de vitesses par l'ensemble d'entraînement (13);

d) les premiers et seconds satellites (36, 38) sont placés sur le même porte-planétaires (46) qui est accouplé avec l'arbre de sortie (48).

2. Transmission selon la revendication 1, caractérisée par un second frein (B2) pour freiner sélectivement le second planétaire (32), lesdits premiers satellites (36) entraînent l'arbre de sortie (48) sur une gamme de vitesses de marche arrière élevées supérieure à la gamme de basses vitesses de marche arrière, mais chevauchant avec elle, lorsque le second planétaire (32) est freiné et que le premier planétaire (30) est entraîné par l'ensemble d'entraînement (13) sur des gammes de vitesses.

3. Transmission selon la revendication 1 ou 2, caractérisée en ce que l'ensemble d'entraînement (13) est un ensemble hydrostatique et comprend un groupe moteur à déplacement variable, de préférence une pompe (14), entraîné par l'arbre de transmission (11), et une section bidirectionnelle menée à déplacement constant, de préférence un moteur (18) entraînant le premier planétaire (30), la pompe (14) et le moteur (18) étant reliés par des conduites de liaison (16) pour échanger du liquide entre eux.

4. Transmission selon la revendication 1, 2 ou 3, caractérisée en ce que lesdits premiers satellites (36) sont de premiers et seconds pignons satellites (40, 41) engrènant respectivement avec le premier planétaire (30) et le second planétaire (32), et en ce que lesdits seconds satellites (38) sont des troisièmes et quatrièmes pignons satellites (42, 43) dont chaque troisième pignon satellite (42) engrène avec le troisième planétaire (34), ainsi qu'avec le planétaire (44) freinable sélectivement, tandis que chaque quatrième satellite (43) engrène avec le premier satellite (40).

5. Transmission selon la revendication 4, caractérisée par une première série de satellites doubles (36) qui comportent chacun un premier pignon satellite (40) et un second pignon satellite (41), et par une seconde série de satellites doubles (38) qui comportent chacun un troisième pignon satellite (42) et un quatrième pignon satellite (43).

6. Transmission selon la revendication 5, caractérisée en ce que les premiers et seconds satellites (40, 41) de la première série de satellites doubles (36) sont reliés coaxialement entre eux, le diamètre du premier pignon satellite (40) étant supérieur à celui du second pignon satellite (41).

7. Transmission selon la revendication 5 ou 6, caractérisée en ce que les troisièmes et quatrièmes pignons satellites (42, 43) de la seconde serie de satellites doubles (38) sont reliés coaxialement entre eux, le diamètre du quatrième pignon satellite (43) étant supérieur à celui du troisième pignon satellite (42).

8. Transmission selon l'une des revendications précédentes, caractérisée en ce que le premier planétaire, le second planétaire et le troisième planétaire sont une première roue solaire (30), une seconde roue solaire (32) et une troisième roue solaire (34) alignées axialement entre elles.

9. Transmission selon l'une des revendications précédentes, caractérisée en ce que le planétaire freinable à volonté est une couronne dentée extérieure (44), et en ce que le porte-planétaires est un porte-pignons planétaires (46) relié à l'arbre de sortie (48).

10. Transmission selon la revendication 8 ou 9, caractérisée en ce que l'ensemble d'entraînement (13) est relié au premier planétaire (à la première roue solaire) (30) par un arbre auxiliaire (22) s'étendant à partir de cet ensemble d'entraînement (13), portant un premier pignon (24) qui engrène avec un second pignon (26) relié coaxialement à la première roue solaire (30).

11. Transmission selon la revendication 10, caractérisée en ce que l'arbre auxiliaire (22) est entraîné directement par le moteur (18).

12. Transmission selon la revendication 10 ou 11, caractérisée en ce que l'arbre auxiliaire (22) est disposé parallèlement à l'arbre de transmission (11), et à distance de celui-ci.

13. Transmission selon l'une des revendications 8 à 12, caractérisée en ce que la première roue solaire (30) est placée sur un arbre d'entrée (28) de la boîte de vitesses, tandis que la troisième roue solaire (34) est placée à côté du porte-planétaires (46) et que la seconde roue solaire (32) est placée entre les deux autres roues solaires.

14. Transmission selon l'une des revendications précédentes, caractérisée par un premier embrayage ou accouplement (C1) permettant de relier sélectivement l'arbre de transmission (11) au troisième planétaire (34), et par un second embrayage ou accouplement (C2) permettant de relier sélectivement l'arbre de transmission (11) au second planétaire (32).

15. Transmission selon la revendication 14, caractérisée en ce que le premier embrayage (C1) peut être accouplé avec un premier moyeu (53) placé sur un arbre (54) relié coaxialement à la troisième roue solaire (34).

16. Transmission selon la revendication 15, caractérisée en ce que la première roue solaire (30), ainsi que le second pignon (26), sont calés angulairement coaxialement sur les extrémités d'un second arbre creux (28) constituant l'arbre d'entrée de la boîte de vitesses, entourant le premier arbre creux (58).

# FIG. 1

**FIG. 2**

**FIG. 5**

| Im Eingriff stehende Übertragungsglieder | | | | |
|---|---|---|---|---|
| Geschwindig-keitsbereich | $C_1$ | $C_2$ | $B_1$ | $B_2$ |
| Kriechgang-V | | | X | |
| Arbeit | X | | | |
| Transport | | X | | |
| neutral | | | | |
| Kriechgang-R | | | X | |
| rückwärts | | | | X |
| | | | | |

**Geschwindigkeitsbereiche**

hydrostat. Bereiche

hydromech. Bereiche

Transport

Arbeit

Kriechgang

rückwärts

-6 -4 -2 0 2 4 6 8 10 12 14 16 18 20

-5 -2.8 2.8

rückw. vorw.

← MPH →

**FIG. 3**

0 045 022

FIG. 4